Europäisches Patentamt

European Patent Office

Office européen des brevets

(19)

(11) Veröffentlichungsnummer: **0 230 225 B1**

# (12) EUROPÄISCHE PATENTSCHRIFT

(45) Veröffentlichungstag der Patentschrift: **23.10.91**

(21) Anmeldenummer: **87100089.9**

(22) Anmeldetag: **07.01.87**

(51) Int. Cl.5: **B60N 3/00**, B08B 17/04, A47C 31/10

(54) **Schutzbezugssatz für, bei der Durchführung von Reparaturarbeiten abzudeckende Fahrzeugteile (Service-Set).**

(30) Priorität: **18.01.86 DE 3601390**

(43) Veröffentlichungstag der Anmeldung:
**29.07.87 Patentblatt 87/31**

(45) Bekanntmachung des Hinweises auf die Patenterteilung:
**23.10.91 Patentblatt 91/43**

(84) Benannte Vertragsstaaten:
**AT BE CH DE ES FR GB GR IT LI LU NL SE**

(56) Entgegenhaltungen:
**EP-A- 0 187 982**
**DE-A- 1 761 480**
**FR-A- 2 491 315**
**US-A- 4 458 738**

(73) Patentinhaber: **Horn, Stephanie, geb. Paul**
**Friedrich-Ebert-Strasse 105**
**W-3578 Schwalmstadt(DE)**

(72) Erfinder: **Horn, Stephanie, geb. Paul**
**Friedrich-Ebert-Strasse 105**
**W-3578 Schwalmstadt(DE)**

(74) Vertreter: **Patentanwälte Dipl.-Ing. Rudolf Bibrach Dipl.-Ing. Elmar Rehberg**
**Postfach 1453 Pütterweg 6**
**W-3400 Göttingen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht von einem Schutzbezugssatz aus einzelnen, zueinandergehörigen Schutzbezugsteilen mit den im Oberbegriff des Anspruchs 1 angegebenen Merkmalen aus. Ein solcher Schutzbezugssatz wird üblicherweise als Service-Set bezeichnet. Er dient dazu, in Werkstätten bei der Durchführung von Reparaturarbeiten an einem Fahrzeug die wesentlichen Teile des Innenraums abzudecken, um sie gegen Verschmutzungen zu sichern. Zu einer solchen Abdeckung gehören mindestens ein Sitzbezug und ergänzende Teile, wie z. B. ein Lenkradüberzug, ein Fußbodenbelag o. dgl., die über die zu schützenden Fahrzeugteile eines Fahrzeugs ausgebreitet werden.

Es ist bekannt, solche Service-Sets in Beuteln zu verpacken, die dann vor Gebrauch zu öffnen sind. Der als Verpackungsbehälter für sämtliche zu einem Schutzbezugssatz gehörigen Schutzbezugsteile dienende Beutel wird nicht weiter verwendet und muß dem Abfall zugeführt werden. Das Zusammenfalten und Einbringen der zu dem Schutzbezugssatz gehörigen Schutzbezugsteile in den Beutel, was in Handarbeit geschah, ist äußerst mühsam und arbeitsaufwendig, so daß sich diese in Beutel verpackten Schutzbezugssätze infolge ihres hohen Preises im Markt nicht haben halten können.

Andererseits ist es z. B. aus der FR-A-3 491 315 oder dem DE-GM 80 23 722 bekannt, Schutzbezugsteile, beispielsweise die Sitzbezüge, aus einer praktisch endlosen Bahn aus Kunststoffolie herzustellen, wobei die einzelnen Sitzbezüge über durchtrennbare Perforationen aneinanderhängend zu einer Vorratsrolle aufgewickelt sind. Ähnlich verhält es sich mit anderen Schutzbezugsteilen. Beispielsweise ist es auch bekannt, die Fußbodenbeläge und/oder die Lenkradüberzüge jeweils in großer Anzahl aus endlosen Bahnen herzustellen und zu je einer Vorratsrolle aufzuwickeln oder die jeweiligen Schutzbezugsteile übereinandergestapelt in Kartons aufzubewahren, so daß der Kraftfahrzeugmonteur bei der Reparaturarbeit sich jeweils seinen Schutzbezugssatz dadurch zusammenstellen kann, daß er beispielsweise einen Sitzbezug von der Rolle abtrennt, sich einen Lenkradüberzug von dem betreffenden Stapel nimmt und auch einen Fußbodenbelag aus der zugehörigen Verpackungskiste zusammensucht. Da diese Teile oft an unterschiedlichen Orten in der Reparaturwerkstatt aufbewahrt werden, stellt das Zusammensuchen und Zusammenstellen eines Schutzbezugssatzes eine für den Kraftfahrzeugmonteur lästige zusätzliche Arbeit dar, die dazu verleitet, nicht alle unbedingt zu einem Schutzbezugssatz gehörenden Teile sich herauszusuchen, sondern nur die allernotwendigsten.

Aus der DE-A-1 761 480 ist ein Verfahren und eine Vorrichtung zum selbsttätigen Einschießen von Bogen in auf Haspel auflaufendes Wickelgut bekannt. Das Einschießen der Bogen kann z. B. notwendig sein, um Bogenpakete in deutlich erkennbarer Weise in bogenzahlmäßig vorbestimmte Teilpartien zu unterteilen oder um fehlerhaftes Wickelgut zu markieren. Es wird eine Vorrichtung gezeigt, mit der es möglich ist, maschinell Zwischenlagenmaterial mit dem Wickelgut während des Aufwickelvorgangs in Verbindung zu bringen.

Der Erfindung liegt die Aufgabe zugrunde, einen Schutzbezugssatz der eingangs genannten Art zu schaffen, bei dem die zu einem Schutzbezugssatz für ein Fahrzeug gehörenden Schutzbezugsteile als Gesamtheit (Service-Set) dem Monteur zur Verfügung stehen, ohne daß Verpackungsbeutel geöffnet und entsorgt werden müssen oder sich der Monteur einen Schutzbezugssatz zusammenstellen muß.

Erfindungsgemäß wird dies dadurch erreicht, daß die den Sitzbezug ergänzenden Schutzbezugsteile in der Tasche des Sitzbezugs untergebracht sind, oder ergänzende Schutzbezugsteile in einer Bahn eines anderen, zum Schutzbezugssatz gehörigen Schutzbezugsteils durch eine Faltung gehalten sind, oder ergänzende Schutzbezugsteile in einer Bahn eines anderen, zum Schutzbezugssatz gehörigen Schutzbezugsteils durch eine Aufwicklung gehalten sind. Die drei aufgezeigten Lösungen haben jeweils auch individuelle Vorteile. Bei Aufnahme der ergänzenden Schutzbezugsteile in der Tasche des Sitzbezugs besteht der Vorteil, daß die ergänzenden Schutzbezugsteile aus der Tasche auch dann nicht herabfallen können, wenn der Sitzbezug über seine in der Regel vorgesehene Perforation von der Vorratsrolle abgerissen worden ist. Wenn dagegen ergänzende Schutzbezugsteile durch eine Faltung oder eine Aufwicklung in einer Bahn eines Schutzbezugsteils gehalten sind, ist es erforderlich, die einzelnen, zu einem Schutzbezugssatz gehörigen Schutzbezugsteile festzuhalten und so bis zum Standort des Fahrzeugs zu tragen und dort dann auf die abzudeckenden Fahrzeugteile abzulegen bzw. aufzuziehen. Gemeinsam ist allen drei Lösungen, daß ein solches Service-Set keine überflüssigen Teile, wie beispielsweise einen Verpackungsbeutel, enthält. Eines der ohnehin vorhandenen Schutzbezugsteile fungiert zugleich auch als Verpackung bzw. dient der Unterbringung und Fixierung der ergänzenden Schutzbezugsteile eines Schutzbezugssatzes. Ein solches Service-Set ist daher einfach zu handhaben. Dem Monteur stehen sämtliche zu dem Schutzbezugssatz gehörenden Schutzbezugsteile als Gesamtheit sofort zur Verfügung, ohne daß er sich die einzelnen Schutzbezugsteile von verschiedenen Orten zusammensuchen muß. Ein solches Service-Set ist auch einfacher und billiger herzustellen, da die Herstellung eines gesonderten Transportbehälters (Beutel) entfällt. Weiterhin können die Schutzbezugssätze automatisch während der Herstellung der einzelnen, zu einem Schutzbezugssatz gehörenden Schutzbezugsteile eingelegt, aufgelegt oder sonstwie maschinell zusammengestellt werden, was erheblich preiswerter als das Zusammenstellen, Falten und Einbringen in einen Beutel in Handarbeit möglich ist. Der Schutzbezugssatz kann an sich beliebig zusammengestellt werden und so z. B. auch der Reinigung dienende Teile, z. B. eine Serviette, ein Putztuch o. dgl., enthalten.

Es ist auch möglich, jeweils die zu einem Schutzbezugssatz gehörenden ergänzenden Schutzbezugsteile beispielsweise auf einem Sitzbezug übereinanderzulegen und durch die Aufwicklung der Vorratsrolle zu halten. Es ist also nicht unbedingt erforderlich, daß die übrigen Schutzbezugsteile in einer Tasche untergebracht sind. Die für den Transport ausreichende Fixierung wird vielmehr auch dann erreicht, wenn die übrigen Schutzbezugsteile beispielsweise in einer Vorratsrolle mit aufgewickelt sind. Auch die Unterbringung in einer Tasche ist insofern nicht zwingend, als auch durch eine Faltung eines Schutzbezugsteils beispielsweise eine taschenähnlich Gestaltung geschaffen wird, die ebenfalls zur Aufnahme der übrigen Schutzbezugsteile geeignet ist. In all diesen Fällen wird aber die Verwendung eines an sich sonst keine weitere Funktion erfüllenden Verpackungsbehälters als zusätzliches Teil vermieden.

Die die Tasche, Faltung oder Aufwicklung zum Festhalten der ergänzenden Schutzbezugsteile aufweisenden Schutzbezugsteile sind zweckmäßig über je eine durchtrennbare Perforation aneinanderhängend zu einer Vorratsrolle aufgewickelt. Damit wird einerseits eine sinnvolle Herstellung und andererseits auch eine zweckmäßige Anwendung ermöglicht. Die ergänzenden Teile sind in der Vorratsrolle geschützt untergebracht und damit vor Schmutzeinwirkung gesichert.

Eine andere Möglichkeit besteht darin, daß mehrere der jeweils Taschen aufweisenden Schutzbezugsteile, die ergänzenden Schutzbezugsteile jeweils darin aufnehmend, zu einem Vorratsstapel einzeln abgelegt sind.

Hier werden also die einzelnen Schutzbezugssätze jeweils bereits zusammengestellt und geordnet übereinandergestapelt, so daß für den Monteur auch hier jeweils ein kompletter Schutzbezugssatz mit einem Handgriff erreichbar und entnehmbar ist. Solche Service-Sets lassen sich auch einzeln an den Verbraucher abgeben, also beispielsweise von seiten der Werkstatt an einen Autobesitzer verkaufen, falls dieser selbst einige Reparatur- oder Pflegearbeiten an seinem Kraftfahrzeug durchführen möchte.

Die Tasche zur Aufnahme der ergänzenden Schutzbezugsteile kann nicht nur am Sitzbezug ausgebildet sein, sondern auch aus dem zusammengelegten Fußbodenbelag gebildet sein, wobei dieser Fußbodenbelag zu einer auf dem Fußboden abzulegenden Abdeckung ausbreitbar ist. Auch dabei ergeben sich wieder die beiden Möglichkeiten, den Fußbodenbelag mit den übrigen, zugehörigen Schutzbezugsteilen auf einer Vorratsrolle aufzuwickeln oder komplett getrennt satzweise übereinanderzustapeln.

Es ist andererseits auch möglich, daß das Schutzbezugsteil, insbesondere der Sitzbezug, mehrere Taschen aufweist, und daß die übrigen zu einem Schutzbezugssatz gehörenden Teile in den mehreren Taschen verteilt untergebracht sind.

Grundsätzlich sind eine ganze Reihe von Verwendungsformen für den Schutzbezugssatz denkbar:

Es ist möglich, Sitzbezüge mit zwei Taschen durch eine Faltung zusammenzulegen, und zwar mit und ohne einer zusätzlichen Stützfaltung, so daß auf diese Art und Weise eine "Kompaktrolle" entsteht; dabei können die übrigen Schutzbezugsteile in einer oder auch in beiden Taschen verteilt angeordnet sein. Die übrigen Schutzbezugsteile müssen aber nicht unbedingt in den Taschen untergebracht sein, sondern können auch lose in die Vorratsrolle beim Aufrollen eingelegt sein. Es ist auch möglich, die übrigen Schutzbezugsteile in eine Falte des Sitzbezugs einzulegen, die bei seiner Faltung zu der Kompaktrolle gebildet wird. Weiterhin ist es möglich, auf die Faltung der Bahn der Sitzbezüge zu verzichten und die Sitzbezüge zu einer breiten Rolle aufzuwickeln, wobei wiederum die übrigen Set-Teile in einer der beiden Taschen, auf beide Taschen verteilt oder lose in die Vorratsrolle eingelegt untergebracht sein können. Es gibt auch Vorratsrollen von Sitzbezügen, die nur eine Tasche aufweisen, wobei dann die übrigen Schutzbezugsteile wiederum entweder in dieser Tasche untergebracht oder lose etwa in Rollenmitte, miteingelegt sein können. Ähnlich Möglichkeiten ergeben sich auch dann, wenn die Sitzbezüge nicht auf eine Vorratsrolle aufgewickelt werden, sondern einzeln getrennt gestapelt werden. In einem solchen Stapel sind die Sitzbezüge eigentlich immer durch eine Faltung zusammengelegt, so daß dabei, also nicht unbedingt in den Taschen, auch die übrigen Set-Teile untergebracht sein können. Schließlich bildet der Fußbodenbelag auch eine Möglichkeit, ihn entweder zu stapeln oder zu einer Rolle aufzuwickeln, wobei auch hier die übrigen Schutzbezugsteile eingelegt oder sonstwie an einem Fußbelagsteil fixiert werden können.

Verschiedene Ausführungsmöglichkeiten der Erfindung sind in den Zeichnungen dargestellt und werden im Folgenden beschrieben. Es zeigen:

Figur 1      eine perspektivische Ansicht einer zum Teil abgewickelten Vorratsrolle aus Sitzbezügen mit jeweils zwei Taschen, wobei in einer oder beiden Taschen der Fußbodenbelag bzw. der Lenkradschutz untergebracht sind, die unabhängig voneinander dargestellt sind,

Figur 2 eine ähnliche Darstellung wie Figur 1, bei der die Vorratsrolle aus auseinanderhängenden Sitzbezügen gebildet ist, die lediglich an einem Längsrand mit einer über die Rükkenlehne zu ziehenden Tasche oder Umschlag versehen sind,

Figur 3 eine aus Sitzbezügen gemäß Figur 1 gebildete Vorratsrolle, die bereits mit Fußbodenbelag und Lenkradüberzug versehen ist, wobei Fußbodenbelag und Lenkradüberzug lose auf den Sitzbezug aufgelegt sind und nur durch die Aufwicklung der Rolle gehalten werden,

Figur 4 eine aus Sitzbezügen gebildete Vorratsrolle gemäß Figur 3, bei der Fußbodenbelag und Lenkradschutz gemeinsam in jeweils eine Tasche eingeschoben sind,

Figur 5 eine weitere, aus Sitzbezügen gebildete Vorratsrolle, bei welcher die Sitzbezüge längsgefaltet und die übrigen Schutzbezugsteile zwischen Längsfaltung und Stützfalte eingelegt sind, und

Figur 6 eine Vorratsrolle aus Taschen, die später voneinander abzutrennen und aufzureißen sind, um einen Fußbodenbelag zu bilden.

Zu einem Service-Set gehören ein Sitzbezug und weitere Schutzbezugsteile, wie z. B. Lenkradüberzug, ein Fußbodenbelag o. dgl. Eine Vielzahl davon können in einer Vorratsrolle oder einem Vorratsstapel vereint sein und so einen Lagervorrat oder Verkaufspackungen bilden, die in den Werkstätten verbraucht werden und/ oder an Kunden abzugeben sind.

Selbstverständlich können zu dem Service-Set auch noch weitere Teile gehören. Die Sitzbezüge können eine oder zwei Taschen aufweisen und mit oder ohne Perforation für den Durchtritt einer Kopfstütze versehen sein. Zweckmäßig ist für die Lagerung eine sogenannte "Kompaktrolle" zu verwenden, auf der eine größere Anzahl von Service-Sets bzw. Sitzbezüge mit vergleichsweise geringer Breite aufgerollt und vorrätig gehalten werden.

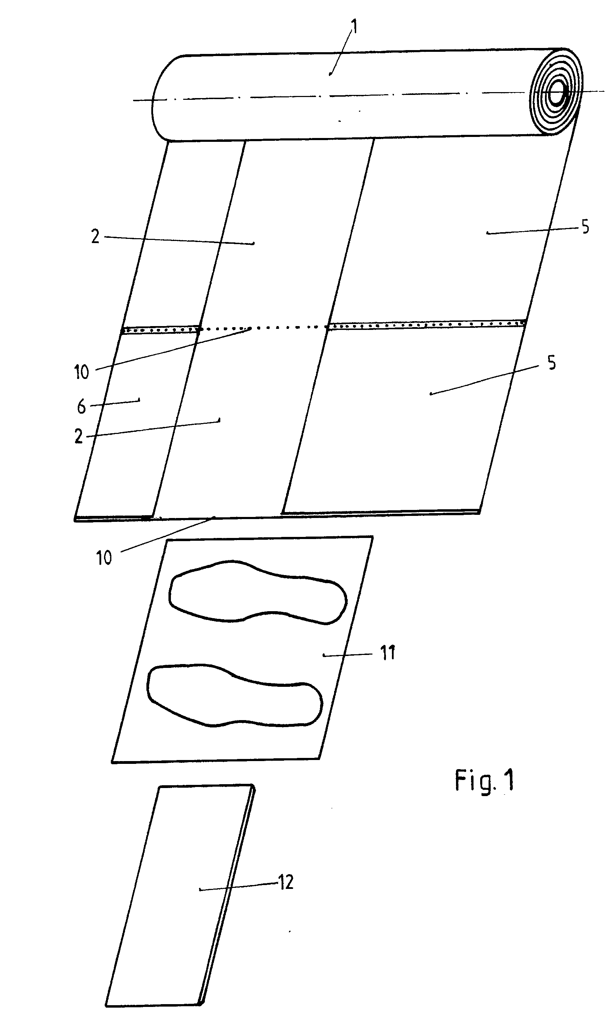

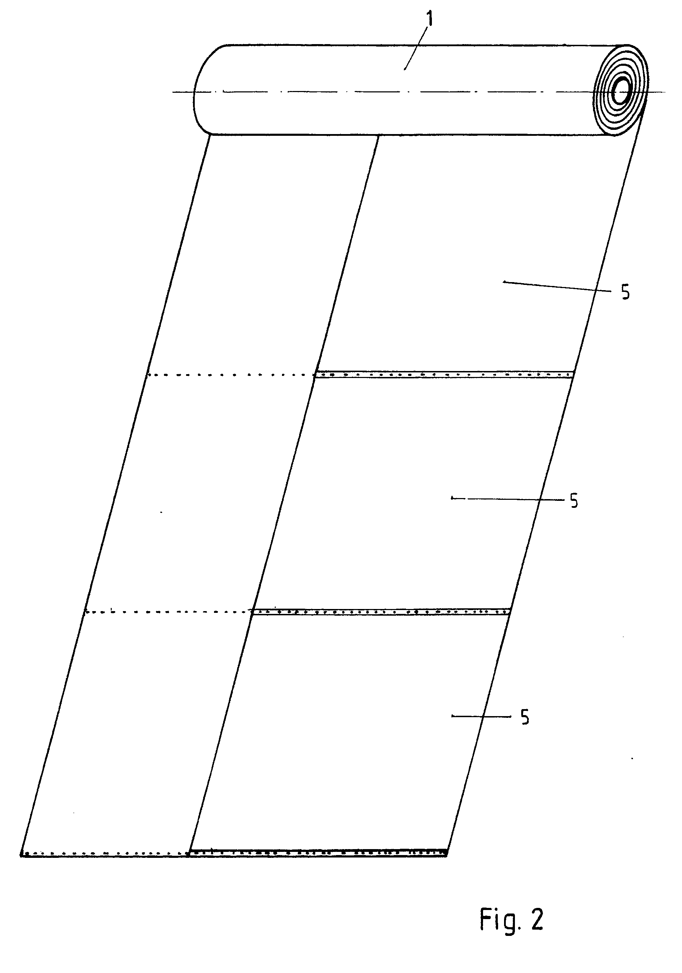

Gemäß Figur 1 weist jede Vorratsrolle 1 aneinanderhängende, flachliegende Sitzbezüge 2 aus Kunststofffolie auf, die untereinander über je eine querlaufende Perforationsschweißung 10 verbunden sind. Ein Abtrennen der einzelnen Sitzbezüge 2 voneinander ist daher sehr leicht möglich. Die Sitzbezüge 2 weisen hier an ihren Enden bzw. an den Längskanten der Rollenbahn einen Umschlag 5 bzw. einen Umschlag 6 auf. Die Umschläge 5 und 6 bilden Taschen, mit deren Hilfe der Sitzbezug 2 über die Rückenlehne bzw. über einen Sitzvorderrand hinweggezogen werden kann. Bei der Ausführungsform gemäß Figur 2 ist nur auf einer Seite ein Umschlag 5 vorgesehen, welcher sich über die Rückenlehne stülpen läßt, so daß das andere Ende löse über den Sitz hinweghängt.

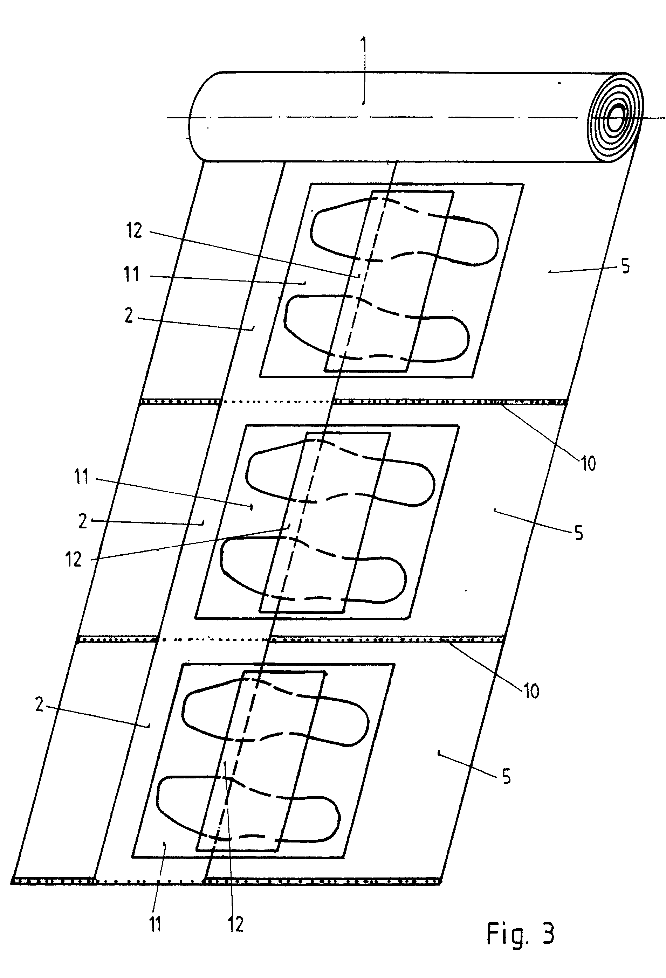

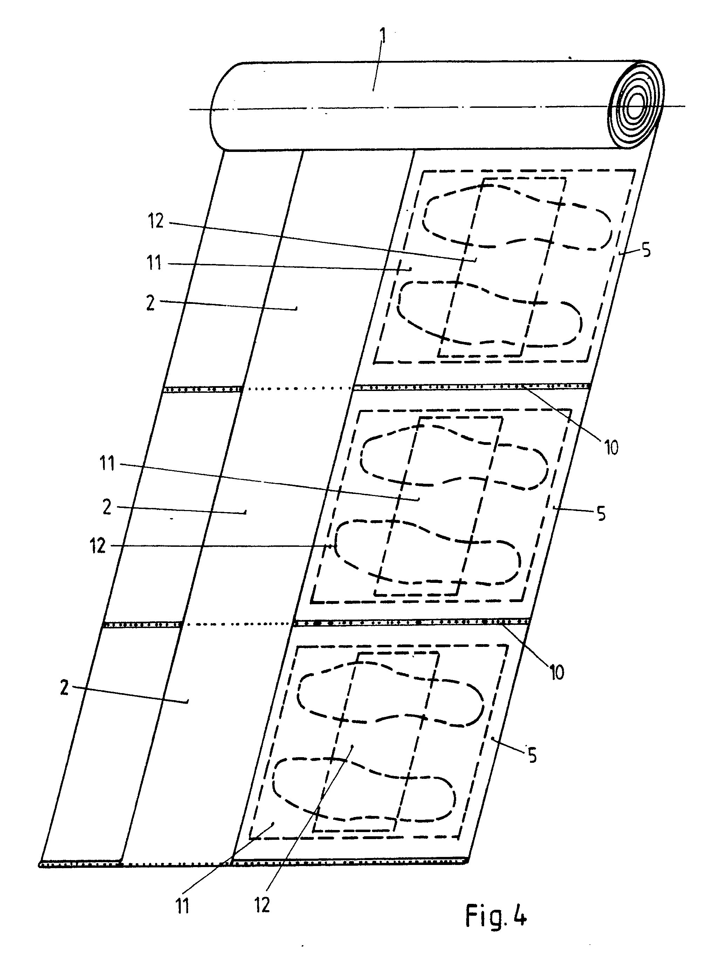

Die Figur 4 zeigt einen ähnlichen Sitzbezug 2 wie Figur 1, jedoch sind hier die übrigen Schutzbezugsteile, d. h. ein Fußbodenbelag 11 und ein Lenkradschutz 12 bereits in eine der Taschen eingelegt. Dies hat den Vorteil, daß beim Abreißen des Sitzbezugs 2 von der Vorratsrolle 1 die übrigen Schutzbezugsteile unverlierbar in der Tasche des Umschlags 5 vorgesehen sind. Im einfachsten Fall ist es jedoch auch möglich, die übrigen Schutzbezugsteile nur lose auf den Sitzbezug 2 aufzulegen, so daß sie beim Aufwickeln auf die Vorratsrolle zwischen den einzelnen Lagen der Vorratsrolle festgeklemmt sind, wie dies in Figur 3 dargestellt ist.

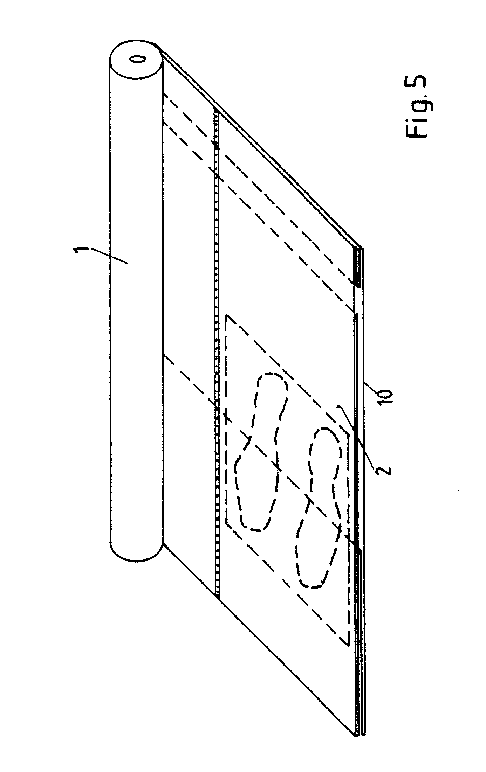

Bei der Ausführungsform gemäß Figur 5, bei welcher die Sitzbezüge 2 gefaltet sind, können die übrigen Schutzbezugsteile anstatt in eine Tasche auch in die Falte eingelegt werden. Die Sitzbezüge 2 weisen zweckmäßig auf einer Seite eine Stützfalte auf, die sicherstellt, daß die Vorratsrolle beim Aufwickeln auf beiden Seiten gleich stark ist.

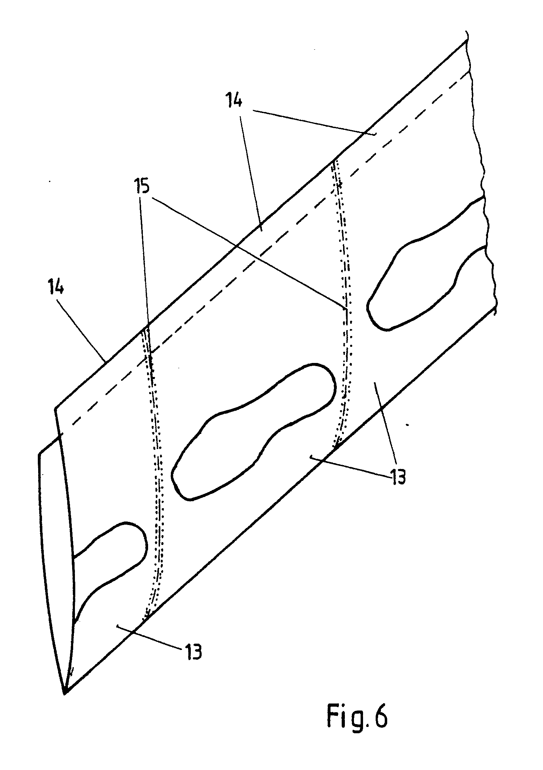

Eine weitere Möglichkeit der Bildung eines Schutzbezugssatzes ist in Figur 6 dargestellt. Hierbei ist aus einem Fußbodenbelag jeweils eine Tasche 13 gebildet, ggf. mit einer umzuschlagenden Verschlußkappe 14. Eine Vielzahl solcher Taschen 13 kann unter Zwischenschaltung je einer Perforation 15 zu einer aufzuwickelnden Bahn vereint sein. Jede Tasche 13 entsteht durch leichte Punktschweißungen oder auch durch eine Heftschweißung, parallel zur Perforation 15, die ihrerseits ohne Beschädigung aufgetrennt werden kann. Jede Tasche 13 kann einen der erwähnten Sitzbezüge sowie einen Lenkradschutz und andere Schutzbezugsteile aufnehmen. Nach der Aufnahme der übrigen Schutzbezugsteile in die Tasche wird die Füllöffnung, beispielsweise durch eine wieder leicht auftrennbare Punktschweißung verschlossen. Nach Entleerung der Tasche sind die Seiten aufzutrennen, so daß der die Tasche bildende Fußbodenbelag nach Auftrennung der seitlichen Ränder seine verwendungsgemäße Form hat, und über dem zu schützenden Fußbodenbelag des Fahrzeugs ausgebreitet werden kann.

Selbstverständlich können in den Taschen auch noch weitere den Schutzbezugssatz ergänzende Teile wie beispielsweise Arbeitshandschuhe, Kopfbedeckungen, Umhänge, Servietten usw. eingelegt bzw. aufbewahrt werden. Ein solches Service-Set kann auch dem Autofahrer beim Verlassen der Werkstatt mitgegeben werden, was häufig zu Werbezwecken üblich ist.

Überzählige Teile wie Verpackungen oder unnütze Beutel sind nicht vorhanden, so daß die entstehende Abfallmenge gering gehalten ist. Zur Verpackung ausgebauter Kraftfahrzeugteile, beispielsweise Zündkerzen, die dem Autofahrer bei Verlassen der Werkstatt ausgehändigt werden, sind besondere Verpackungsbeutel nicht mehr erforderlich, da diese Teile auch in den nun nicht mehr benutzten Sitzbezug eingewickelt werden können.

**Patentansprüche**

1. Schutzbezugssatz aus einzelnen, zueinandergehörigen Schutzbezugsteilen (2, 11, 12), die bei der Durchführung von Reparaturarbeiten an einem Fahrzeug zum Schutz abzudeckender Fahrzeugteile eingesetzt werden, wobei der Schutzbezugssatz einen mindestens eine Tasche aufweisenden Sitzbezug (2) und ergänzende Schutzbezugsteile, wie z. B. Lenkradüberzug (11), Fußbodenbelag (12) o. dgl. aufweist und Teile eines Schutzbezugssatzes gemeinsam verpackt untergebracht sind, dadurch gekennzeichnet, daß die den Sitzbezug (2) ergänzenden Schutzbezugsteile (11, 12) in der Tasche des Sitzbezugs untergebracht sind, oder ergänzende Schutzbezugsteile in einer Bahn eines anderen, zum Schutzbezugssatz gehörigen Schutzbezugsteils durch eine Faltung gehalten sind, oder ergänzende Schutzbezugsteile in einer Bahn eines anderen, zum Schutzbezugssatz gehörigen Schutzbezugsteils durch eine Aufwicklung gehalten sind.

2. Schutzbezugssatz nach Anspruch 1, dadurch gekennzeichnet, daß die die Tasche, Faltung oder Aufwicklung zum Festhalten der ergänzenden Schutzbezugsteile aufweisenden Schutzbezugsteile über je eine durchtrennbare Perforation aneinanderhängend zu einer Vorratsrolle aufgewickelt sind.

3. Schutzbezugssatz nach Anspruch 1 und 2, dadurch gekennzeichnet, daß mehrere der jeweils Taschen aufweisenden Schutzbezugsteile, die ergänzenden Schutzbezugsteile jeweils darin aufnehmend, zu einem Vorratsstapel einzeln abgelegt sind.

4. Schutzbezugssatz nach Anspruch 2 oder 3, dadurch gekennzeichnet, daß die Tasche aus dem zusammengelegten Fußbodenbelag gebildet und zu einer auf dem Fußboden abzulegenden Abdeckung ausbreitbar ist.

5. Schutzbezugssatz nach Anspruch 3 oder 4, dadurch gekennzeichnet, daß das Schutzbezugsteil, insbesondere der Sitzbezug, mehrere Taschen aufweist, und daß die übrigen zu einem Schutzbezugssatz gehörenden Teile in den mehreren Taschen verteilt untergebracht sind.

**Claims**

1. Protective cover set of individual protective cover parts (2, 11, 12), which belong together and are used for the protection of vehicle parts to be covered during the performance of repair work on a vehicle, wherein the protective cover set displays a seat cover (2), which displays at least one pocket, and augmenting protective cover parts, such as for example steering wheel cover (11), floor covering (12) or the like and parts of a protective cover set are accommodated packaged together, characterised thereby, that the protective parts (11, 12) augmenting the seat cover (2) are accommodated in the pocket of the seat cover or augmenting protective cover parts are retained by folding into a web of another protective cover part belonging to the protective cover set or augmenting protective cover parts are retained by reeling into a web of another protective cover part belonging to the protective cover set.

2. Protective cover set according to claim 1, characterised thereby, that the protective cover parts, which display the pocket, folding or reeling for the retention of the augmenting protective cover parts, are reeled into a stock roll while joined together by way of a respective severable perforation.

3. Protective cover set according to claim 1 and 2, characterised thereby, that several of the protective cover parts displaying respective pockets respectively receiving the augmenting protective cover parts therein are deposited individually into a stock stack.

4. Protective cover set according to claim 2 or 3, characterised thereby, that the pocket is formed of the folded floor covering and spreadable into a cover to be laid on the floor.

5. Protective cover set according to claim 3 or 4, characterised thereby, that the protective cover part, in particular the seat cover, displays several pockets and that the remaining parts belonging to a protective cover set are accommodated distributed in the several pockets.

les autres éléments de protection appartenant à un jeu de housses sont rangés en étant répartis dans ces poches multiples.

## Revendications

1. Jeu de housses de protection se composant d'éléments individuels assortis (2, 11, 12) destinés à être posés sur les parties d'un véhicule devant être protégées pendant des travaux de réparation, ce jeu de housses présentant une housse de siège (2) qui présente au moins une poche, et des éléments de protection complémentaires tels que, par exemple, une housse de volant (11), une garniture de plancher (12), ou autres, et dans lequel les éléments d'un jeu de housses de protection sont emballés ensemble,

   caractérisé en ce que les éléments de protection (11, 12) complétant la housse de siège (2) sont rangés dans la poche de la housse de siège, ou que les éléments de protection complémentaires sont maintenus par un pli dans une laize d'un autre élément de protection appartenant au jeu de housses, ou que les éléments de protection complémentaires sont maintenus par enroulement dans une laize d'un autre élément de protection appartenant au jeu de housses de protection.

2. Jeu de housses de protection selon la revendication 1, caractérisé en ce que les éléments du jeu de housses présentant la poche, le pli ou l'enroulement pour le maintien des éléments complémentaires du jeu de housses sont enroulés sous la forme d'un rouleau de stockage, en étant reliés l'un à l'autre par une perforation séparable.

3. Jeu de housses de protection selon les revendications 1 et 2, caractérisé en ce que plusieurs des éléments de housses de protection présentant chacun une poche recevant chaque fois les éléments de protection complémentaires sont empilés un à un en formant une pile de stockage.

4. Jeu de housses de protection selon la revendication 2 ou 3, caractérisé en ce que la poche est formée à partir de la garniture de plancher pliée sur elle-même et peut être déployée sous la forme d'une couverture destinée à être posée sur le plancher.

5. Jeu de housses de protection selon la revendication 3 ou 4, caractérisé en ce que l'élément du jeu de housses, en particulier la housse de siège, présente plusieurs poches, et en ce que

Fig. 1

Fig. 2

Fig. 3

Fig. 4

Fig. 5

Fig. 6